# EUROPÄISCHE PATENTSCHRIFT

(11) **EP 2 135 800 B1**
(45) Veröffentlichungstag und Bekanntmachung des Hinweises auf die Patenterteilung: **20.03.2013**
(21) Anmeldenummer: 09007323.0
(22) Anmeldetag: 03.06.2009
(51) Int. Cl.: B62D 33/06, B60H 1/00, B60H 1/26

(54) **Baumaschine, insbesondere Straßenfräsmaschine, Miner, Recycler oder Stabilisierer**
Construction machine, in particular road milling machine, mining machine, recycler or stabiliser
Machine de construction, en particulier fraiseuse routière, machine minière, machine à recycler ou stabilisateur

(30) Priorität: 18.06.2008 DE 102008028955
(43) Veröffentlichungstag der Anmeldung: 23.12.2009
(73) Patentinhaber: Wirtgen GmbH, 53578 Windhagen (DE)
(72) Erfinder: Böhme, Heiko, 53560 Vettelschloß (DE); Kramer, Thomas, 50670 Köln (DE); Hähn, Günter, Dr., 53639 Königswinter (DE)
(74) Vertreter: Oppermann, Frank

(56) Entgegenhaltungen:
- EP-A1- 1 609 701
- EP-A1- 1 669 225
- WO-A1-91/12150
- US-A- 4 211 364
- US-A1- 2004 187 509
- US-B1- 6 273 494

## Beschreibung

Die Erfindung betrifft eine Baumaschine, insbesondere selbstfahrende Baumaschine, die über eine Arbeitseinheit zur Durchführung von für die Baumaßnahme erforderlichen Arbeiten sowie einen Fahrstand mit einer Fahrerkabine für den Fahrzeugführer verfügt, wobei der Fahrstand mit der Fahrerkabine um eine vertikale Achse drehbar am Maschinenrahmen angeordnet ist. Insbesondere betrifft die Erfindung eine Straßenfräsmaschine, einen Recycler oder einen Stabilisierer. Die Erfindung bezieht sich aber auch auf andere Baumaschinen, beispielsweise Maschinen zur Ausbeutung von Lagerstätten im Tagebaubetrieb, die auch als Miner bezeichnet werden.

Im Straßenbau und zur Ausbeutung von Lagerstätten werden selbstfahrende Baumaschinen unterschiedlicher Bauart eingesetzt. Mit den bekannten Straßenfräsmaschinen können bestehende Straßenschichten des Straßenoberbaus abgetragen, mit den bekannten Recyclern bestehende Straßenbeläge wiederhergestellt und mit den bekannten Stabilisierern der Unterbau für den Straßenbau vorbereitet werden.

Die bekannten Straßenfräsmaschinen, Recycler oder Stabilisierer sowie die bekannten Maschinen zur Ausbeutung von Lagerstätten im Tagebaubetrieb verfügen als Arbeitseinheit über eine Fräs- oder Schneidwalze, die mit Fräswerkzeugen bestückt ist. Darüber hinaus weisen derartige Baumaschinen einen Fahrstand auf, der im Allgemeinen über eine Fahrerkabine für den Fahrzeugführer verfügt.

Es sind selbstfahrende Baumaschinen bekannt, bei denen der Fahrstand mit der Fahrerkabine für den Fahrzeugführer am Maschinenrahmen um eine vertikale Achse drehbar angeordnet ist, so dass der Fahrzeugführer in eine für die Beobachtung des Betriebs der Maschine optimale Position gebracht werden kann. Ein um eine vertikale Achse verschwenkbarer Fahrstand mit einer Fahrerkabine für eine Baumaschine ist beispielsweise aus der US 2006/0202514 A1 bekannt. Landwirtschaftliche Fahrzeuge, die einen drehbaren Fahrstand mit Fahrerkabine aufweisen, sind beispielsweise aus der DE 38 07 848 C2 und DE 297 15 066 U1 bekannt.

Zur Erzeugung und Aufrechterhaltung eines gleichmäßigen Raumklimas sind Klimaanlagen bekannt, die nach den einzelnen Funktionen in unterschiedliche Kategorien eingeteilt werden. Die Klimaanlage im klassischen Sinne erlaubt sowohl die Heizung, Kühlung, Befeuchtung und Entfeuchtung der Luft. Es sind aber auch Klimaanlagen bekannt, die lediglich der Raumkühlung dienen. Auch sind Anlagen bekannt, mit denen die Luft gereinigt wird. Sämtliche Anlagen dienen letztlich der Aufbereitung von Luft.

Während bei Lastkraft- und Personenkraftwagen die Klimaanlagen eine breite Anwendung gefunden haben, verfügen Straßenfräsmashinen, Recycler oder Stabilisierer vielfach nicht über eine Klimatisierung der Fahrerkabine. Insbesondere bei den Baumaschinen, bei denen der Fahrstand mit Fahrerkabine drehbar am Maschinenrahmen angeordnet ist, hat man aus konstruktiven Gründen bisher von dem Einbau einer Klimaanlage insbesondere dann grundsätzlich abgesehen, wenn der Fahrstand mit der Fahrerkabine um 360° drehbar oder endlos drehbar am Maschinenrahmen gelagert ist.

Die US 4,211,364 beschreibt einen Traktor, bei dem die Zuführung der aufgeheizten Luft über einen Ringraum erfolgt, der konzentrisch zur Drehachse der Fahrerkabine angeordnet ist. Dabei wird über einen exzentrisch zur Drehachse der Fahrerkabine angeordneten Anschluss die aufbereitete Luft in die Fahrerkabine geleitet. Eine Abführung der verbrauchten Luft aus der Fahrerkabine zu dem Einlass der Luftaufbereitungseinrichtung sieht der bekannte Traktor aber nicht vor.

Der Erfindung liegt die Aufgabe zu Grunde, eine Baumaschine, die über einen drehbar am Maschinenrahmen angeordneten Fahrstand mit Fahrerkabine verfügt, mit einer Einrichtung zur Aufbereitung von Luft für die Fahrerkabine auszustatten, wobei die Luftaufbereitungseinrichtung die Versorgung der gegenüber dem Maschinenrahmen drehbaren Fahrerkabine mit kalter und/oder warmer Luft und/oder befeuchteter oder entfeuchteter Luft und/oder gereinigter Luft erlaubt.

Diese Aufgabe wird erfindungsgemäß mit den Merkmalen des Patentanspruchs 1 gelöst. Vorteilhafte Ausführungsformen der Erfindung sind Gegenstand der Unteransprüche.

Die erfindungsgemäße Baumaschine zeichnet sich dadurch aus, dass die Luftaufbereitungseinzichtung außerhalb der Fahrerkabine am Maschinenrahmen angeordnet ist, wobei eine Einrichtung zur Zuführung von aufbereiteter Luft in die Fahrerkabine und verbrauchter Luft aus der Fahrerkabine vorgesehen ist, die einen Zuluftkanal für aufbereitete Luft für die Fahrerkabine und einen Abluftkanal für verbrauchte Luft aus der Fahrerkabine aufweist. Der Zuluftkanal der Luftführungseinrichtung ist mit dem Auslass der Luftaufbereitungseinrichtung und der Abluftkanal mit dem Einlass der Luftaufbereitungseinrichtung verbunden. Anstelle von Luft, die in der Luftaufbereitungsvorrichtung aufbereitet worden ist, kann auch Frischluft zugeführt werden. Auch kann der aufbereiteten Luft Frischluft beigemischt werden. Der Fahrerkabine kann somit frische und/oder aufbereitete Luft zugeführt werden.

Die Anordnung der Luftaufbereitungseinrichtung außerhalb der Fahrerkabine hat bei einer Baumaschine, deren Fahrstand mit Fahrerkabine drehbar am Maschinenrahmen angeordnet ist, den entscheidenden Vorteil, dass eine Führung von Schläuchen und/oder Leitungen für Kältemittel und elektrischen Strom bzw. hydraulischer Energie zwischen der gegenüber dem Maschinenrahmen drehbaren Fahrerkabine und dem Maschinenrahmen nicht erforderlich ist. Zwar besteht grundsätzlich die Möglichkeit, Schläuche und/oder Leitungen zwischen drehbaren Teilen vorzusehen, die Abdichtung bzw. Kontaktierung der Schläuche und/oder Leitungen erweist sich jedoch aus konstruktiver Sicht als aufwendig und störanfällig. Daher hat man bisher von einer Klimatisierung insbesondere endlos gegenüber dem Maschinerahmen drehbaren Fahrerkabinen abgesehen. Demgegenüber hat die erfindungsgemäße Baumaschine den Vorteil, dass Gleitdichtungen oder Schleifkontakte nicht erforderlich sind.

Da die Luftaufbereitungseinrichtung im oder am Maschinenrahmen vorgesehen ist, kann die Luftaufbereitungseinrichtung auf einfache Weise betrieben werden. Beispielsweise können die Aggregate der Luftaufbereitungseinrichtung von der Antriebseinheit (Motor) der Baumaschine direkt angetrieben werden.

Eine bevorzugte Ausführungsform der Baumaschine sieht vor, dass der Zu- und Abluftkanal der Luftführungseinrichtung einen äußeren Abschnitt, der von einem drehfest mit dem Maschinenrahmen verbundenden Bauteil gebildet wird, und einen inneren Abschnitt aufweist, der von einem drehfest mit der Fahrerkabine verbundenen Bauteil gebildet wird, wobei der äußere Abschnitt den inneren Abschnitt zumindest bereichsweise umschließt. Damit ist eine konzentrische Luftführung über das Drehgelenk des Fahrstandes möglich.

Unter den mit dem Maschinenrahmen bzw. dem Fahrstand oder der Fahrerkabine verbundenen Bauteilen werden in diesem Zusammenhang Bauteile verstanden, die gegeneinander verdreht werden können, wobei angenommen wird, dass der Maschinenrahmen ortsfest ist und der Fahrstand mit der Fahrerkabine gegenüber dem Maschinenrahmen verdreht wird. Dabei müssen die Bauteile nicht separate Baugruppen bilden, sondern können auch Teil des Maschinenrahmens bzw. des Fahrstandes sein.

Bei einer bevorzugten Ausführungsform weist der Zuluftkanal den äußeren Abschnitt, der von dem drehfest mit dem Maschinenrahmen verbundenden Bauteil gebildet wird, und der Abluftkanal den inneren Abschnitt der Luftführungseinrichtung auf, der von dem drehfest mit dem Fahrstand bzw. der Fahrerkabine verbundenen Bauteil gebildet wird. Es ist aber grundsätzlich auch eine Umkehrung der Luftführung möglich, bei der die Zuführung der Zuluft über den inneren Abschnitt und die Abführung der Abluft über den äußeren Abschnitt der Luftführung erfolgt.

Die Verteilung der Luft in der Fahrerkabine wird bei einer besonders bevorzugten Ausführungsform dadurch vereinfacht, dass der Fahrstand mit Fahrerkabine ein Bauteil mit einer ersten Kammer und einer zweiten Kammer aufweist, die von einer Trennwand voneinander getrennt sind, wobei der äußere Abschnitt des Zu- und Abluftkanals mit der ersten Kammer und der innere Abschnitt des Zu- und Abluftkanals mit der zweiten Kammer verbunden ist. Die Trennwand zwischen den beiden Kammern verhindert, dass Luft aus dem Zuluftkanal direkt zu dem Abluftkanal gelangen kann.

Die beiden Kammern können unterschiedlich ausgebildet sein. Allein entscheidend ist, dass die Kammern der Luftführung in der Fahrerkabine dienen. Vorzugsweise weist das Bauteil des Fahrstandes mit der ersten und zweiten Kammer eine Bodenplatte sowie eine Deckplatte sowie eine Vorder- und Rückwand und Seitenwände auf, wobei sich die Trennwand vorzugsweise zwischen den Seitenwänden erstreckt, so dass das Bauteil in eine vordere Kammer, die der Vorderseite der Fahrerkabine zugewandt ist, und eine hintere Kammer unterteilt ist, die der Rückwand der Fahrerkabine zugewandt ist. Folglich kann die Luftzuführung an der Vorderseite und die Luftrückfiihrung an der Rückseite der Fahrerkabine erfolgen.

Bei einer weiteren besonders bevorzugten Ausführungsform ist das Bauteil zur Luftführung der Fahrerkabine mit der ersten und zweiten Kammer als Bodenteil der Fahrerkabine ausgebildet. Bei dieser Ausführungsform erstreckt sich eine Luftleiteineinrichtung vorzugsweise von der vorderen Kammer des Bodenteils der Fahrerkabine in der Fahrerkabine nach oben, wobei die Luftleiteinrichtung eine oder mehrere Luftaustrittsöffnungen aufweist, über die frische und/oder aufbereitete Luft in die Fahrerkabine eintreten kann. Die hintere Kammer des Bodenteils weist eine Luftauslassöffnung auf, über die verbrauchte Luft aus der Fahrerkabine austreten kann. Damit ist es möglich, frische und/oder aufbereitete Luft nahe der Vorderwand der Fahrerkabine zuzuführen und verbrauchte Luft im hinteren Teil der Fahrerkabine unterhalb des Fahrersitzes abzuführen.

Der innere Abschnitt des Zu- und Abluftkanals wird vorzugsweise von einem zylindrischen Bauteil gebildet, das die Bodenplatte des Bauteils zur Luftführung der Fahrerkabine unter Ausbildung eines Durchgangs durchdringt, der sich aber nur über einen Teil des Umfangs des zylindrischen Bauteils erstreckt. Dabei schließt sich die Trennwand vorzugsweise an das die Bodenplatte durchdringende zylindrischen Bauteil an, wobei die Trennwand sich über den Teil des Umfangs des zylindrischen Bauteils erstreckt, der von dem Durchgang in der Bodenplatte umschlossen wird.

Ein besonders kompakter Aufbau wird bei einer weiteren besonders bevorzugten Ausführungsform dadurch erreicht, dass das Bauteil zur Luftführung des Maschinenrahmens von einer Trennwand in eine obere und untere Kammer getrennt ist, die über einen Durchgang in der Trennwand miteinander verbunden sind. Dabei kann die Luftaufbereitungseinrichtung in einer der beiden Kammern angeordnet sein. Vorzugsweise ist die Luftaufbereitungseinrichtung in der oberen Kammer angeordnet.

Die obere Kammer des Bauteils zur Luftführung des Maschinenrahmens ist vorzugsweise über den Durchgang in der Bodenplatte des Bauteils zur Luftführung der Fahrerkabine mit der ersten, vorderen Kammer des Bauteils zur Luftführung der Fahrerkabine verbunden, während die untere Kammer des Bauteils zur Luftführung des Maschinenrahmens über das zylindrischen Bauteil mit der zweiten, hinteren Kammer des Bauteils der Fahrerkabine verbunden ist.

Die Luftaufbereitungseinrichtung der erfindungsgemäßen Baumaschine kann eine Einrichtung zur Erzeugung von kalter und/oder warmer Luft und/oder eine Einrichtung zum Befeuchten und Entfeuchten von Luft, aber auch eine Einrichtung zur Reinigung von Luft sein, die beispielsweise über einen Filter oder dergleichen verfügt. Bei einer bevorzugten Ausführungsform der Erfindung handelt es sich bei der Luftaufbereitungseinrichtung um eine Klimaanlage, die die Erwärmung und/oder Kühlung der Fahrerkabine erlaubt. Es ist aber auch möglich, nur eine Heizeinrichtung oder eine Kühleinrichtung oder eine Luftreinigungseinrichtung vorzusehen. Die Luftaufbereitungseinrichtung umfasst vorzugsweise nur zwei der Aggregate der gesamten Klimaanlage, während die anderen Aggregate am Maschinenrahmen verteilt angeordnet sein können. Vorzugsweise umfasst die Luftaufbereitungseinrichtung nur den Lüfter und den Heizer und/oder Verdampfer der Klimaanlage. Entscheidend ist, dass die anderen Aggregate mit der Zu- und Abluft am Maschinenrahmen vorgesehen sind, wobei die Luft zwischen dem Maschinenrahmen und der gegenüber dem Maschinenrahmen drehbaren Fahrerkabine geführt wird.

Im Folgenden wird ein Ausführungsbeispiel der Erfindung unter Bezugnahme auf die Zeichnungen im Einzelnen erläutert.

Es zeigen:
- Fig. 1: Als Beispiel für eine Baumaschine eine selbstfahrende Straßenfräsmaschine in der Seitenansicht,
- Fig. 2: der drehbar am Maschinenrahmen angeordnete Fahrstand mit Fahrerkabine der Straßenfräsmaschine in teilweiser geschnittener perspektivischer Darstellung,
- Fig. 3: das mit der Fahrerkabine verbundene Bauteil zur Luftführung und das mit dem Maschinenrahmen zu verbindende Bauteil zur Luftführung in teilweise geschnittener Darstellung in der Draufsicht und
- Fig. 4: eine Seitenansicht des mit der Fahrerkabine verbundenen Bauteils zur Luftführung und des mit dem Maschinenrahmen zu verbindenden Bauteils zur Luftführung in teilweise geschnittener Darstellung.

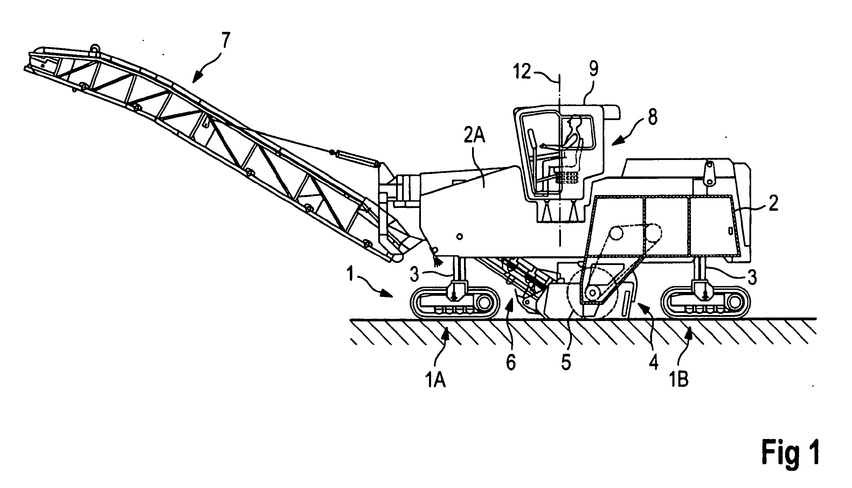

Fig. 1 zeigt als Beispiel für eine selbstfahrende Baumaschine eine Straßenfräsmaschine zum Abfräsen von Straßenbelägen aus Asphalt, Beton oder dergleichen. Die Straßenfräsmaschine weist einen von einem Fahrwerk 1 getragenen Maschinenrahmen 2 auf. Der Maschinenrahmen 2 weist im Wesentlichen vertikal verlaufende seitliche Außenwände 2A auf. Das Fahrwerk 1 der Fräsmaschine umfasst beispielsweise vier Kettenlaufwerke 1 A, 1 B, die an der Vorder- und Rückseite auf beiden Seiten des Maschinenrahmens angeordnet sind. Die Kettenlaufwerke sind höhenverstellbar an Hubsäulen 3 befestigt, die am Maschinenrahmen 2 angebracht sind. Es versteht sich, dass anstelle von Kettenlaufwerken auch Räder vorgesehen sein können. Die Straßenfräsmaschine verfügt über eine Arbeitseinheit 4, bei der es sich um eine Fräseinrichtung mit einer Fräswalze 5 handelt, die mit nicht dargestellten Fräsmeißeln bestückt ist. Die Fräswalze 5 ist am Maschinenrahmen zwischen den vorderen und hinteren Kettenlaufwerken 1A, 1B angeordnet. Mit der Fräswalze wird der Straßenbelag abgefräst. In Fahrtrichtung vor der Fräswalze 5 ist eine erste Transporteinrichtung 6 angeordnet, die das abgefräste Material mit einem Transportband vorzugsweise zu einer zweiten Transporteinrichtung 7 überträgt, die das Material mit einem zweiten Transportband zu einem Lastwagen befördert.

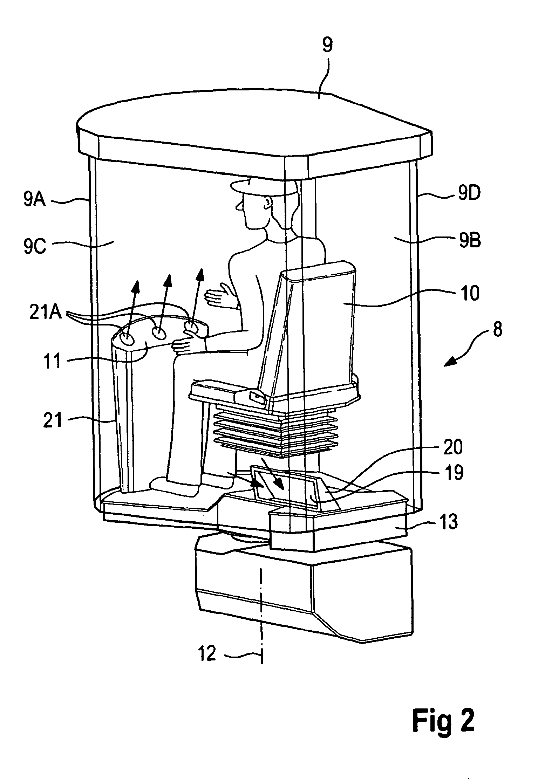

Auf der Oberseite des Maschinenrahmens 2 ist ein Fahrstand 8 für den Fahrzeugführer angeordnet. Der Fahrstand 8 ist von einer Fahrerkabine 9 umgeben. Die Fahrerkabine 9 weist eine Vorderwand 9A, eine Rückwand 9B sowie Seitenwände 9C und 9D auf. Vorderwand, Rückwand und Seitenwände weisen entweder eine Frontscheibe und Heckscheibe bzw. Seitenscheiben auf oder sind vollständig verglast (Fig. 2).

Die Straßenfräsmaschine verfügt weiterhin über eine Einrichtung zur Aufbereitung von Luft, die außerhalb der Fahrerkabine am Maschinenrahmen angeordnet ist. Die Luftaufbereitungseinrichtung wird nachfolgend unter Bezugnahme auf die Figuren 2 bis 4 im Einzelnen beschrieben.

Die Figuren 2 bis 4 sollen nur das Prinzip der Erfindung erläutern. Daher zeigen die Figuren 2 bis 4 nicht exakt den Fahrstand 8, der bei der Straßenfräsmaschine von Fig. 1 gezeigt ist. Dennoch werden für die einander entsprechenden Teile die gleichen Bezugszeichen verwendet.

In der Fahrerkabine 9 ist ein höhenverstellbarer Fahrersitz 10 vor einem nur andeutungsweise dargestellten Bedien- und Anzeigepult 11 angeordnet. Der Fahrstand 8 mit der Fahrerkabine 9 ist auf dem Maschinenrahmen 2 um eine vertikale Achse 12 drehbar gelagert, so dass der Fahrzeugführer in eine für die Beobachtung des Rangier- und Fräsbetriebs der Maschine optimale Position gebracht werden kann. Die Fahrerkabine kann gegenüber dem Maschinenrahmen endlos gedreht oder um einen kleineren Winkel verschwenkt werden. Es ist möglich, dass der Fahrstand neben der Drehbewegung auch eine translatorische Bewegung ausübt. Beispielsweise kann der Fahrstand an einem Schlitten quer zum Maschinenrahmen verschiebbar und auf dem Schlitten drehbar gelagert sein.

Der Fahrstand 8 weist einen Bodenteil 13 auf, der um die vertikale Achse 12 drehbar an dem Maschinenrahmen 2 der Baumaschine, beispielsweise Straßenfräsmaschine befestigt ist. Auf dem Bodenteil 13 des Fahrstandes 8 sitzt die Fahrerkabine 9 mit der Vorderwand 9A, der Rückwand 9B sowie den Seitenwänden 9C und 9D, wobei der Bodenteil 13 des Fahrstandes 8 gleichsam den Bodenteil der Fahrerkabine bildet.

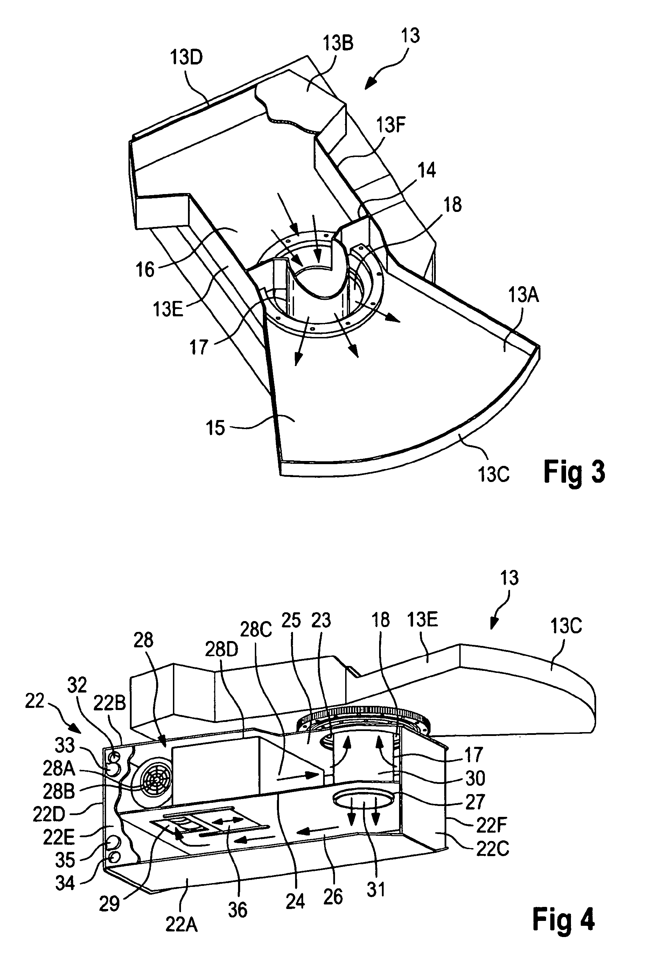

Der Bodenteil 13 des Fahrstandes 8 weist eine Bodenplatte 13A, eine Deckplatte 13B sowie eine Vorderwand 13C, eine Rückwand 13D und zwei Seitenwände 13E, 13F auf (Fig. 3). Zwischen den Seitenwänden 13E, 13F verläuft eine Trennwand 14, die den Bodenteil 13 in einer erste vordere Kammer 15 und eine zweite hintere Kammer 16 trennt. In die vordere Kammer 15 wird frische und/oder aufbereitete Luft geblasen, während aus der hinteren Kammer 16 verbrauchte Luft angesaugt wird. Die Luftströmung ist in Fig. 3 mit Pfeilen gekennzeichnet.

Die Bodenplatte 13B des Bodenteils 13 wird von einem hohlzylindrischen Bauteil 17 unter Ausbildung eines Durchgangs 18 durchbrochen, der sich über einen Teil des Umfangs, beispielsweise 270° des hohlzylindrischen Bauteils 17 erstreckt. Bei dem hohlzylindrischen Bauteil 17 handelt es sich um die hohlzylindrische Gelenkwelle eines nur andeutungsweise dargestellten Drehgelenks, mit dem der Fahrstand 8 mit der Fahrerkabine 9 drehbar am Maschinenrahmen 2 gelagert ist.

Die Trennwand 14 des Bodenteils 13 erstreckt sich zwischen den Seitenwänden 13E, 13F des Bodenteils 13 und über den Teil des Umfangs des hohlzylindrischen Bauteils 17, der von dem Durchgang 18 in der Bodenplatte 13A umschlossen wird, so dass über den Durchgang 18 eine getrennte Strömungsverbindung von einem kastenförmigen Bauteil 25 am Maschinenrahmen, das nachfolgend noch beschrieben wird, zu der vorderen Kammer 15 und über das hohlzylindrische Bauteil 17 zu der hinteren Kammer 16 des Bodenteils 13 hergestellt wird.

Auf der Deckplatte 13B des Bodenteils 13 ist der Fahrersitz 10 angeordnet. Die hintere Kammer 16 des Bodenteils 13 weist eine Lufteinlassöffnung 19 auf, die unterhalb des Fahrersitzes 15 in der Deckplatte 13B des Bodenteils 13 angeordnet ist. Auf der Lufteinlassöffnung 19 sitzt ein seitlich geöffneter Lufteinlassschacht 20, der mit einem nicht dargestellten Gitter verschlossen ist.

An die vordere Kammer 15 des Bodenteils 13 ist eine Luftleiteinrichtung 21 angeschlossen, die sich von der Deckplatte 13B des Bodenteils 13 in Fahrtrichtung hinter der Vorderwand 9A der Fahrerkabine 9 nach oben erstreckt. Die Luftleiteinrichtung 21 weist mehrere Luftaustrittsöffnungen 21A auf, die hinter der Vorderwand der Fahrerkabine angeordnet sind. Bei dem vorliegenden Ausführungsbeispiel bildet das Gehäuse der Luftleiteinrichtung und der Bedien- und Anzeigeeinheit eine Einheit.

Die Pfeile in Fig. 2 machen deutlich, dass frische und/oder aufbereitete Luft aus den Luftaustrittsöffnungen 21 A vor dem Fahrzeugführer in die Fahrerkabine 9 geblasen und verbrauchte Luft unterhalb des Fahrersitzes 10 aus der Fahrerkabine angesaugt wird.

Während der Bodenteil 13 der Fahrerkabine 9 als ein Bauteil zur Luftführung, d.h. zum Zuführen und Abführen der Luft in die und aus der Fahrerkabine ausgebildet ist, weist auch der Maschinenrahmen 2 ein Bauteil 22 zur Luftzu- und -abführung auf, das Fig. 4 in teilweise geschnittener Darstellung zeigt.

Das kastenförmige Bauteil 22 zur Luftführung am Maschinenrahmen 2 weist wiederum eine Bodenplatte 22A, eine Deckplatte 22B, eine Vorderwand 22C, eine Rückwand 22D und zwei Seitenwände 22E und 22F auf. Die Deckplatte 22A des Bauteils 22 weist in der vorderen Hälfte eine kreisförmige Ausnehmung 23 auf, durch die sich das hohlzylindrische Bauteil 17 in das kastenförmige Bauteil 22 erstreckt. Der Radius der kreisförmigen Ausnehmung 23 ist wesentlich größer als der des hohlzylindrischen Teils 17 und entspricht dem Radius des Durchgangs 18 in der Bodenplatte 13A des Bodenteils 13 der Fahrerkabine 9.

Das kastenförmige Bauteil 22 am Maschinenrahmen 2 wird von einer horizontalen Trennwand 24 in eine obere Kammer 25 und eine untere Kammer 26 getrennt, wobei sich das hohlzylindrische Bauteil 17 durch die kreisförmige Ausnehmung 23 der Deckplatte 22B und eine kreisförmige Ausnehmung 27 der Trennwand 24 in die untere Kammer 26 erstreckt. Der Durchmesser der kreisförmigen Ausnehmung 27 der Trennwand 24 entspricht dem Durchmesser des hohlzylindrischen Bauteils 17, so dass zwischen dem hohlzylindrischen Bauteil und der Trennwand nur ein schmaler Spalt verbleibt, der mit einer nicht dargestellten Dichtung, beispielsweise einer umlaufenden Bürste oder dergleichen, abgedichtet ist.

In der oberen Kammer 25 des kastenförmigen Bauteils 22 ist zwischen dem hohlzylindrischen Bauteil 17 und der Rückwand 22D eine Luftaufbereitungseinrichtung 28 angeordnet. Die nur schematisch dargestellte Luftaufbereitungseinrichtung 28 verfügt über einen Lüfter 28A zum Ansaugen bzw. Ausblasen von Luft und ein Aggregat 28D zur Aufbereitung 28 der Luft sowie über einen Einlass 28B für frische und/oder verbrauchte Luft und einen Auslass 28C für aufbereitete Luft.

Zwischen dem Einlass 28B für frische und/oder verbrauchte Luft der Luftaufbereitungseinrichtung 28 und der Rückwand 22D des kastenförmigen Bauteils 22 weist die horizontale Trennwand 24 einen Durchgang 29 auf, so dass die obere Kammer 25 mit der unteren Kammer 26 des kastenförmigen Bauteils 22 verbunden ist.

Wenn die Luftaufbereitungseinrichtung 28 betrieben wird, strömt aus dem Auslass 28C der Luftaufbereitungseinrichtung aufbereitete Luft, die über die Ausnehmung 23 der Deckplatte 22B des kastenförmigen Bauteils 22 und den Durchgang 18 der Bodenplatte 13A des Bodenteils 13 in die vordere Kammer 15 des Bodenteils geblasen wird. Aus der vorderen Kammer 15 des Bodenteils 13 strömt die aufbereitete Luft dann durch die Luftleiteinrichtung 21 und tritt aus deren Luftaustrittsöffnungen 21 A aus. Die verbrauchte Luft, die unterhalb des Fahrersitzes 10 über die Lufteinlassöffnung 19 angesaugt wird, strömt durch die hintere Kammer 16 des Bodenteils 13 und das hohlzylindrische Bauteil 17 in die untere Kammer 26 des kastenförmigen Bauteils 22. Über den Durchgang 29 in der Trennwand 24 wird die verbrauchte Luft in den hinteren Bereich der oberen Kammer 25 des kastenförmigen Bauteils 22 von dem Lüfter 28A wieder angesaugt und durch das Aggregat 28D der Luftaufbereitungseinrichtung 28 geblasen. Es ist auch möglich, dass der Lüfter 28A stromab der Luftaufbereitungseinrichtung 28 angeordnet wird, so dass die Luft in das Aggregat 28D der Luftaufbereitungseinrichtung 28 angesaugt wird.

An der Rückwand 22D der oberen Kammer 25 des kastenförmigen Bauteils 22 befindet sich stromauf der Luftaufbereitungseinrichtung 28 ein Einlass 32 zur Zuführung von Frischluft, der mit einer nur andeutungsweise dargestellten Klappe 33 vollständig oder teilweise verschließbar ist, so dass ausschließlich Frischluft zugeführt oder dem Luftstrom Frischluft beigemischt werden kann. Weiterhin befindet sich an der Rückwand 22D der unteren Kammer 26 des kastenförmigen Bauteils 22 ein Auslass 34 für verbrauchte Luft, der ebenfalls mit einer Klappe 35 vollständig oder teilweise verschließbar ist. An den Luftein- und - auslass 32, 34 können nicht dargestellte Zu- und Abluftkanäle angeschlossen sein. Darüber hinaus ist der Durchgang 29 zwischen der oberen und unteren Kammer 25, 26 mit einem nur andeutungsweise dargestellten Schieber 36 vollständig oder teilweise verschließbar. Die Klappen 33, 35 und der Schieber 36 können von einer nicht dargestellten Steuereinrichtung mit nicht dargestellten Betätigungsorganen geöffnet oder geschlossen werden. Damit ist es möglich die Zufuhr von Frischluft zu regeln. Bei vollständig geöffneten Klappen 33, 35 und geschlossenem Schieber 36 ist es möglich, nur Frischluft zuzuführen und sämtliche verbrauchte Luft abzuführen. Für den reinen Umluftbetrieb werden die Klappen 33, 35 geschlossen und der Schieber vollständig geöffnet.

Fig. 4 zeigt, das der Zu- und Abluftkanal für die Luftführung in die und aus der Fahrerkabine 9 einen äußeren Abschnitt 30 umfasst, der von dem vorderen Bereich der oberen Kammer 16 des ortsfesten Bauteils 22 begrenzt wird, und einen inneren Abschnitt 31 umfasst, der von dem zylindrischen Bauteil 17 des drehbaren Bauteils 13 begrenzt wird. Die Luftströmung ist unabhängig davon, in welcher Position sich die Fahrerkabine 9 gegenüber dem Maschinenrahmen 2 befindet, da die Strömungsquerschnitte unabhängig von der Winkelstellung der Fahrerkabine sind.

Bei der bevorzugten Ausführungform ist das hohlzylindrische Bauteil 17 drehfest mit dem Bodenteil 13 des Fahrstandes 8 verbunden, während das hohlzylindrische Bauteil 17 in dem in die obere und untere Kammer 25, 26 unterteilten kastenförmigen Bauteil 22 des Maschinenrahmens drehbar ist. Es ist aber auch eine umgekehrte Anordnung möglich, bei der das in die obere und untere Kammer unterteile kastenförmige Bauteil am Fahrstand vorgesehen ist. Bei dieser Ausführungsform ist dann das hohlzylindrische Bauteil 17 drehbar im Fahrstand angeordnet und drehfest mit dem Maschinenrahmen verbunden.

Die Luftaufbereitungseinrichtung 28 kann eine Einrichtung zum Erwärmen und/oder Kühlen und/oder Befeuchten und/oder Entfeuchten und/oder Reinigen von Luft sein. Die als Luftaufbereitungseinrichtung bezeichnete Anlage soll stellvertretend für alle Einrichtungen oder Teile dieser Einrichtung sein, mit denen Luft erwärmt und/oder gekühlt und/oder befeuchtet und/oder entfeuchtet und/oder gereinigt werden kann. Bei einer bevorzugten Ausführungsform der Erfindung, die eine Klimatisierung der Fahrerkabine vorsieht, ist die Luftaufbereitungseinrichtung 28 Teil einer Klimaanlage.

Dabei umfasst die Luftaufbereitungseinrichtung den Lüfter und die Heizer/Verdampfer-Kombination der Klimaanlage, die neben dem Lüfter und der Heizer/Verdampfer-Kombination über einen nicht dargestellten Kompressor und einen Kondensator verfügt, die außerhalb des kastenförmigen Bauteils 22 am Maschinenrahmen 2 angeordnet sind.

Der nicht dargestellte Kondensator der Klimaanlage ist vorzugsweise am Motorkühler angeordnet, so dass der schon vorhandene Lüfter des Motors Luft durch den Kondensator blasen kann. Der Kompressor ist vorzugsweise in der Nähe des Motors angeordnet, so dass der Kompressor vom Motor über einen Riemen angetrieben werden kann. Kompressor und Kondensator sind über nicht dargestellte Kältemittelleitungen mit der Heizer/Verdampfer-Kombination verbunden. Darüber hinaus ist die Heizer/Verdampfer-Kombination über nicht dargestellte Kühlwasserleitungen mit dem Kühlkreislauf des Motors der Baumaschine verbunden. Da dem Fachmann Aufbau und Funktionsweise einer Klimaanlage bekannt sind, wird der besseren Übersichtlichkeit halber auf die Darstellung dieser Details verzichtet. Entscheidend ist, dass sich sämtliche Aggregate der Klimaanlage mit der erfindungsgemäßen Luftführung außerhalb des gegenüber dem Maschinenrahmen drehbaren Fahrstandes an den jeweils optimalen Positionen mit einem verhältnismäßig geringen konstruktiven Aufwand anordnen lassen. Darüber hinaus erweist sich als vorteilhaft, dass mögliche Undichtigkeiten in dem Luftführungssystem nicht zu den Problemen führen können, die sich aus möglichen Leckagen bzw. Kontaktschwierigkeiten in einem Kältemittelsystem oder hydraulischen System bzw. einem elektrischen System ergeben. Ein Verlust an Luft, könnte einfach durch eine größere Dimensionierung der Luftaufbereitungseinrichtung ausglichen werden, wobei die zu erwartende Menge an Luft, die aufgrund von Undichtigkeiten austreten könnte, so gering sein dürfte, dass die bestehende Dimensionierung des Systems ohnehin ausreicht.

## Patentansprüche

1. Baumaschine, insbesondere Straßenfräsmaschine, Miner, Recycler oder Stabilisierer, mit
einem Maschinenrahmen (2),
einer Arbeitseinheit (4) zur Durchführung von für die Baumaßnahme erforderlichen Arbeiten,
einem Fahrstand (8), der um eine Achse (12) drehbar am Maschinenrahmen angeordnet ist, wobei der Fahrstantd eine Fahrerkabine (9) für den Fahrzeugführer aufweist,
einer außerhalb der Fahrerkabine (9) am Maschinenrahmen (2) angeordneten Einrichtung (28) zur Aufbereitung von Luft für die Fahrerkabine (9), welche einen Einlass (28B) für verbrauchte und/oder frische Luft und einen Auslass (28C) für aufbereitete Luft aufweist, und
einer Einrichtung (13, 22) zur Zufübrung von aufbereiteter Luft in die Fahrerkabine, welche einen Zuluftkanal für aufbereitete Luft für die Fahrerkabine aufweist, wobei der Zuluftkanal mit dem Auslass (28C) der Luftautbereitungseinrichtung (28) verbunden ist,
**dadurch gekennzeichnet, dass**
die Einrichtung (13, 22) zur Zuführung von aufbereiteter Luft in die Fahrerkabine als eine Einrichtung zum Zuführung von aufbereiteter Luft in die Fahrerkabine und verbrauchter Luft aus der Fahrerkabine ausgebildet ist, welche einen Zuluftkanal für aufbereitete Luft für die Fahrerkabine und einen Abluftkanal für verbrauchte Luft aus der Fahrerkabine aufweist, wobei der Zuluftkanal mit dem Auslass (28C) der Luftaufbereitungseinrichtung (28) und der Abluftkanal mit dem Einlass (28B) der Luftautbereitungseinrichtung verbunden ist,

2. Baumaschine nach Anspruch 1, **dadurch gekennzeichnet, dass** der Zu- und Abluftkanal der Einrichtung (13, 22) zur Zuführung von aufbereiteter Luft in die Fahrerkabine und verbrauchter Luft aus der Fahrerkabine einen inneren Abschnitt (31) und einen den inneren Abschnitt umschließenden äußeren Abschnitt (30) umfasst, wobei der innere Abschnitt gegenüber dem äußeren Abschnitt verdrehbar ist.

3. Baumaschine nach Anspruch 2, **dadurch gekennzeichnet, dass** der Zuluftkanal den äußeren Abschnitt (30) der Luftführung umfasst, und der Abluftkanal den inneren Abschnitt (31) der Luftführung umfasst.

4. Baumaschine nach Anspruch 3, **dadurch gekennzeichnet, dass** der Fahrstand (8) mit der Fahrerkabine (9) ein Bauteil (13) zur Luftführung mit einer ersten Kammer (15) und einer zweiten Kammer (16) aufweist, die von einer Trennwand (14) voneinander getrennt sind, wobei der äußere Abschnitt (31) des Zu- und Abluftkanals mit der ersten Kammer und der innere Abschnitt (30) des Zu- und Abluftkanals mit der zweiten Kammer verbunden ist.

5. Baumaschine nach Anspruch 4, **dadurch gekennzeichnet, dass** das Bauteil (13) zur Luftführung der Fahrerkabine eine Bodenplatte (13A) und eine Deckplatte (13B) sowie eine Vorderwand (13C) und eine Rückwand (13D) und zwei Seitenwände (13E, 13F) aufweist.

6. Baumaschine nach Anspruch 5, **dadurch gekennzeichnet, dass** sich die Trennwand (14) des Bauteils (13) zur Luftführung der Fahrerkabine zwischen den Seitenwänden (13E, 13F) erstreckt.

7. Baumaschine nach einem der Ansprüche 4 bis 6, **dadurch gekennzeichnet, dass** das Bauteil (13) zur Luftführung der Fahrerkabine als Bodenteil der Fahrerkabine (9) ausgebildet ist, in dem die erste und zweite Kammer (15,16) angeordnet sind.

8. Baumaschine nach Anspruch 7, **dadurch gekennzeichnet, dass** an der ersten Kammer (15) des Bauteils (13) zur Luftführung der Fahrerkabine eine Luftleiteinrichtung (21) angeschlossen ist, die sich vom Bodenteil (13) der Fahrerkabine in der Fahrerkabine nach oben erstreckt, wobei die Luftleiteinrichtung (21) eine oder mehrere Luftaustrittsöffuungen (21A) aufweist.

9. Baumaschine nach Anspruch 7 oder 8, **dadurch gekennzeichnet, dass** die zweite Kammer (16) des Bauteils (13) zur Luftführung der Fahrerkabine eine Lufteinlassöffnung (19) aufweist.

10. Baumaschine nach einem der Ansprüche 5 bis 9, dadurch gekennzeichet, dass der innere Abschnitt (30) des Zu- und Abluftkanals von einem zylindrischen Bauteil (17) gebildet wird, das die Bodenplatte (13A) des Bauteils (13) zur Luftführung der Fahrerkabine unter Ausbildung eines Durchganges (18) in der Bodenplatte durchdringt, der sich über einen Teil des Umfangs des zylindrischen Bauteils (17) erstreckt.

11. Baumaschine nach Anspruch 10, **dadurch gekennzeichnet, dass** sich die Trennwand (14) an das die Bodenplatte (13A) des Bauteils (13) zur Luftführung der Fahrerkabine durchdringende zylindrische Bauteil (17) anschließt, wobei sich die Trennwand über den Teil des Umfangs des zylindrischen Bauteils erstreckt, der von dem Durchgang (18) in der Bodenplatte (13A) umschlossen wird.

12. Baumaschine nach einem der Ansprüche 1 bis 11, **dadurch gekennzeichnet, dass** der Maschinenrahmen (2) ein Bauteil (22) zur Luftführung aufweist, das von einer Trennwand (24) in eine obere Kammer (25) und eine untere Kammer (26) getrennt ist.

13. Baumaschine nachAnspruch 12, **dadurch gekennzeichnet, dass** die obere und untere Kammer (25,26) des Bauteils (22) zur Luftührung des Maschinenrahmens über einen Durchgang (29) in der Trennwand (24) miteinander verbunden sind und in einer der beiden Kammern (25, 26) die Luftaufbereitungseinrichtung (28) angeordnet ist.

14. Baumaschine nach Anspruch 13, **dadurch gekennzeichnet, dass** die Luftaufbereitungseinrichtung (28) in der oberen Kammer (25) angeordnet ist.

15. Baumaschine nach einem der Ansprüche 12 bis 14, **dadurch gekennzeichnet, dass** die obere Kammer (25) des Bauteils (22) zur Luftführung des Maschinenrahmens über den Durchgang (18) in der Bodenplatte (13A) des Bauteils (13) zur Luftführung der Fahrerkabine mit der ersten Kammer (15) des Bauteils (13) zur Luftführung der Fahrerkabine verbunden ist, und die untere Kammer (26) des Bauteils (22) zur Luftführung des Maschinenrahmens über das zylindrische Bauteil (17) mit der zweiten Kammer (16) des Bauteils (13) zur Luftführung der Fahrerkabine verbunden ist.

16. Baumaschine nach einem der Ansprüche 1 bis 15, **dadurch gekennzeichnet, dass** die Luftautbereltungseinrichtung (28) eine Einrichtung zur Erzeugung von kalter und/oder warmer Luft und/oder eine Einrichtung zum Entfeuchten von Luft und/oder eine Einrichtung zum Reinigen von Luft ist.

## Claims

1. Civil engineering machine and in particular a road milling machine, miner, recycler or stabiliser,
having a chassis (2),
having a working unit (4) for carrying out work required for the civil engineering operation,
having a driver's station (8) which is arranged on the chassis of the machine to be rotatable on an axis (12), the driver's station having a driver's cab (9) for the driver of the machine,
having an arrangement (28) for treating air for the driver's cab (9), which arrangement (28) is arranged on the chassis (2) of the machine away from the driver's cab (9) and has an inlet (28B) for used and/or fresh air and an outlet (28C) for treated air, and
having an arrangement (13, 22) for feeding treated air into the driver's cab which has a duct for incoming air for treated air for the driver's cab, the duct for incoming air being connected to the outlet (28C) of the air-treating arrangement (28),
**characterised in that**
the arrangement (13, 22) for feeding treated air into the driver's cab takes the form of an arrangement for feeding treated air into the driver's cab and for feeding used air out of the driver's cab which has a duct for incoming air for treated air for the driver's cab and a duct for outgoing air for used air from the driver's cab, the duct for incoming air being connected to the outlet (28C) of the air-treating arrangement (28) and the duct for outgoing air being connected to the inlet (28B) of the air-treating arrangement.

2. Civil engineering machine according to claim 1, **characterised in that** the ducts for incoming and outgoing air of the arrangement (13, 22) for feeding treated air into the driver's cab and for feeding used air out of the driver's cab have an inner portion (31) and an outer portion (30) which surrounds the inner portion, the inner portion being rotatable relative to the outer portion.

3. Civil engineering machine according to claim 2, **characterised in that** the duct for incoming air comprises the outer portion (30) of the air feeding means and the duct for outgoing air comprises the inner portion (31) thereof.

4. Civil engineering machine according to claim 3, **characterised in that** the driver' station (8) having the driver's cab (9) has a component (13) for feeding air which has a first chamber (15) and a second chamber (16) which are separated from one another by a partition (14), the outer portion (31) of the ducts for incoming and outgoing air being connected to the first chamber and the inner portion (30) of the ducts for incoming and outgoing air being connected to the second chamber.

5. Civil engineering machine according to claim 4, **characterised in that** the component (13) for feeding air of the driver's cab has a bottom plate (13A) and a top plate (13B) plus a front wall (13C), a rear wall (13D) and two side walls (13E, 13F).

6. Civil engineering machine according to claim 5, **characterised in that** the partition (14) of the component (13) for feeding air of the driver's cab extends between the side walls (13E, 13F).

7. Civil engineering machine according to one of claims 4 to 6, **characterised in that** the component (13) for feeding air of the driver's cab takes the form of a bottom part of the driver's cab (9), in which the first and second chambers (15, 16) are arranged.

8. Civil engineering machine according to claim 7, **characterised in that** there is connected to the first chamber (15) of the component (13) for feeding air of the driver's cab an air-directing arrangement (21) which extends upwards in the driver's cab from the bottom part (13) of the driver's cab, the air-directing arrangement having one or more air outlet openings (21 A).

9. Civil engineering machine according to claim 7 or 8, **characterised in that** the second chamber (16) of the component (13) for feeding air of the driver's cab has an air inlet opening (19).

10. Civil engineering machine according to one of claims 5 to 9, **characterised in that** the inner portion (30) of the ducts for incoming and outgoing air is formed by a cylindrical component (17) which passes through the bottom plate (13A) of the component (13) for feeding air of the driver's cab, forming as it does so a through-opening (18) in the bottom plate which extends around part of the circumference of the cylindrical component (17).

11. Civil engineering machine according to claim 10, **characterised in that** the partition (14) is connected to the cylindrical component (17) which passes through the bottom plate (13A) of the component (13) for feeding air of the driver's cab, the partition extending around that part of the circumference of the cylindrical component which is enclosed by the through-opening (18) in the bottom plate (13A).

12. Civil engineering machine according to one of claims 1 to 11, **characterised in that** the chassis (2) of the machine has a component (22) for feeding air which is divided into an upper chamber (25) and a lower chamber (26) by a partition (24).

13. Civil engineering machine according to claim 12, **characterised in that** the upper and lower chambers (25, 26) of the component (22) for feeding air of the chassis of the machine are connected together by a through-opening (29) in the partition (24) and the air-treating arrangement (28) is arranged in one of the two chambers (25, 26).

14. Civil engineering machine according to claim 13, **characterised in that** the air-treating arrangement (28) is arranged in the upper chamber (25).

15. Civil engineering machine according to one of claims 12 to 14, **characterised in that** the upper chamber (25) of the component (22) for feeding air of the chassis of the machine is connected to the first chamber (15) of the component (13) for feeding air of the driver's cab by the through-opening (18) in the bottom plate (13A) of the component (13) for feeding air of the driver's cab, and the lower chamber (26) of the component (22) for feeding air of the chassis of the machine is connected to the second chamber (16) of the component (13) for feeding air of the driver's cab by the cylindrical component (17).

16. Civil engineering machine according to one of claims 1 to 15, **characterised in that** the air-treating arrangement (28) is an arrangement for producing cold and/or hot air and/or an arrangement for dehumidifying air and/or an arrangement for cleaning air.

## Revendications

1. Engin de chantier, en particulier fraiseuse routière, machine d'exploitation minière, recycleuse ou stabilisateur de chaussée, avec
un châssis de machine (2),
une unité de travail (4) pour l'exécution de travaux exigés pour le chantier,
un poste de conduite (8), monté de manière rotative autour d'un axe (12) sur le châssis de machine, ledit poste de conduite comportant une cabine de conducteur (9) pour le conducteur de l'engin,
un dispositif (28) de traitement d'air pour la cabine de conducteur (9) monté sur le châssis de machine (2) à l'extérieur de la cabine de conducteur (9), lequel comporte une admission (28B) pour l'air vicié et/ou l'air frais et une évacuation (28C) pour l'air traité, et
un dispositif (13, 22) d'amenée d'air traité vers la cabine de conducteur, lequel comporte une conduite d'amenée de l'air traité pour la cabine de conducteur, ladite conduite d'amenée étant reliée à l'évacuation (28C) du dispositif de traitement d'air (28),
**caractérisé en ce que**
le dispositif (13, 22) d'amenée d'air traité vers la cabine de conducteur est réalisé comme un dispositif d'amenée d'air traité vers la cabine de conducteur et d'évacuation d'air vicié hors de la cabine de conducteur, lequel comporte une conduite d'amenée de l'air traité pour la cabine de conducteur et une conduite d'évacuation de l'air vicié hors de la cabine de conducteur, la conduite d'amenée d'air étant reliée à l'évacuation (28C) du dispositif de traitement d'air (28) et la conduite d'évacuation d'air étant reliée à l'admission (28B) du dispositif de traitement d'air.

2. Engin de chantier selon la revendication 1, **caractérisé en ce que** la conduite d'amenée et d'évacuation d'air du dispositif (13, 22) d'amenée d'air traité vers la cabine de conducteur et d'évacuation d'air vicié hors de la cabine de conducteur comprend une partie intérieure (31) et une partie extérieure (30) entourant la partie intérieure, la partie intérieure étant rotative par rapport à la partie extérieure.

3. Engin de chantier selon la revendication 2, **caractérisé en ce que** la conduite d'amenée d'air comprend la partie extérieure (30) du guidage d'air, et la conduite d'évacuation d'air comprend la partie intérieure (31) du guidage d'air.

4. Engin de chantier selon la revendication 3, **caractérisé en ce que** le poste de conduite (8) comporte avec la cabine de conducteur (9) un composant (13) de guidage d'air avec un premier compartiment (15) et un deuxième compartiment (16) séparés l'un de l'autre par une cloison de séparation (14); la partie extérieure (31) de la conduite d'amenée et d'évacuation d'air étant reliée au premier compartiment et la partie intérieure (30) de la conduite d'amenée et d'évacuation d'air étant reliée au deuxième compartiment.

5. Engin de chantier selon la revendication 4, **caractérisé en ce que** le composant (13) de guidage d'air de la cabine de conducteur comporte une plaque de fond (13A) et une plaque de couverture (13B) ainsi qu'une paroi avant (13C), une paroi arrière (13D) et deux parois latérales (13E, 13F).

6. Engin de chantier selon la revendication 5, **caractérisé en ce que** la cloison de séparation (14) du composant (13) de guidage d'air de la cabine de conducteur s'étend entre les parois latérales (13E, 13F).

7. Engin de chantier selon l'une des revendications 4 à 6, **caractérisé en ce que** le composant (13) de guidage d'air de la cabine de conducteur est réalisé comme pièce de plancher de la cabine de conducteur (9), où sont disposés le premier et le deuxième compartiments (15, 16).

8. Engin de chantier selon la revendication 7, **caractérisé en ce qu'**un dispositif déflecteur d'air (21) est raccordé au premier compartiment (15) du composant (13) de guidage d'air de la cabine de conducteur, lequel s'étend vers le haut, de la pièce de plancher (13) de la cabine de conducteur à l'intérieur de la cabine de conducteur, ledit dispositif déflecteur d'air (21) comportant une ou plusieurs ouvertures de sortie d'air (21A).

9. Engin de chantier selon la revendication 7 ou 8, **caractérisé en ce que** le deuxième compartiment (16) du composant (13) de guidage d'air de la cabine de conducteur comporte une ouverture d'admission d'air (19).

10. Engin de chantier selon l'une des revendications 5 à 9, **caractérisé en ce que** la partie intérieure (30) de la conduite d'amenée et d'évacuation d'air est formée par un composant cylindrique (17), lequel traverse la plaque de fond (13A) du composant (13) de guidage d'air de la cabine de conducteur en formant un passage (18) dans la plaque de fond, lequel s'étend sur une partie de la périphérie du composant cylindrique (17).

11. Engin de chantier selon la revendication 10, **caractérisé en ce que** la cloison de séparation (14) est adjacente au composant cylindrique (17) traversant la plaque de fond (13A) du composant (13) de guidage d'air de la cabine de conducteur, la cloison de séparation s'étendant sur la partie de la périphérie du composant cylindrique qui est entourée par le passage (18) dans la plaque de fond (13A).

12. Engin de chantier selon l'une des revendications 1 à 11, **caractérisé en ce que** le châssis de machine (2) comporte un composant (22) de guidage d'air divisé par une cloison de séparation (24) en un compartiment supérieur (25) et un compartiment inférieur (26).

13. Engin de chantier selon la revendication 12, **caractérisé en ce que** le compartiment supérieur et le compartiment inférieur (25, 26) du composant (22) de guidage d'air du châssis de machine sont reliés l'un à l'autre par un passage (29) dans la cloison de séparation (24) et **en ce que** le dispositif de traitement d'air (28) est monté dans un des deux compartiments (25, 26).

14. Engin de chantier selon la revendication 13, **caractérisé en ce que** die dispositif de traitement d'air (28) est monté dans le compartiment supérieur (25).

15. Engin de chantier selon l'une des revendications 12 à 14, **caractérisé en ce que** le compartiment supérieur (25) du composant (22) de guidage d'air du châssis de machine est relié au premier compartiment (15) du composant (13) de guidage d'air de la cabine de conducteur par le passage (18) dans la plaque de fond (13A) du composant (13) de guidage d'air de la cabine de conducteur, et **en ce que** le compartiment inférieur (26) du composant (22) de guidage d'air du châssis de machine est relié au deuxième compartiment (16) du composant (13) de guidage d'air de la cabine de conducteur par le composant (17) cylindrique.

16. Engin de chantier selon l'une des revendications 1 à 15, **caractérisé en ce que** le dispositif de traitement d'air (28) est un dispositif de production d'air froid et/ou d'air chaud et/ou un dispositif de déshydratation de l'air et/ou un dispositif de purification de l'air.
